Europäisches Patentamt

European Patent Office

Office européen des brevets

(19)

(11) Publication number: **0 108 522**
**B1**

# EUROPEAN PATENT SPECIFICATION

(12)

(45) Date of publication of patent specification: **28.01.87**

(21) Application number: **83306156.7**

(22) Date of filing: **12.10.83**

(51) Int. Cl.⁴: **B 60 K 37/00, B 62 D 25/14, B 60 R 16/02, B 60 H 1/00**

(54) Instrument panel for a motor car.

(30) Priority: **02.11.82 GB 8231258**

(43) Date of publication of application:
**16.05.84 Bulletin 84/20**

(45) Publication of the grant of the patent:
**28.01.87 Bulletin 87/05**

(84) Designated Contracting States:
**BE DE FR GB IT NL SE**

(56) References cited:
**EP-A-0 059 424**
**EP-A-0 081 656**
**DE-A-3 023 905**
**GB-A-1 589 644**
**US-A-4 223 754**

(73) Proprietor: **FORD MOTOR COMPANY LIMITED**
**Eagle Way**
**Brentwood Essex CM13 3BW (GB)**
(84) **BE GB IT**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Percy, John Albert George**
**2, Huntsman's Drive**
**Upminster Essex (GB)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to an instrument panel for a motor car.

Assembly of the instrument panel into a motor car is a time consuming step in production. Apart from the mechanical mounting of the panel into the car body, it is also necessary to connect up wiring and air ducts for the heater unit. As a result of these various connections, there is a reliability problem in mounting this component.

In this specification, the term "instrument" will be used to refer to all items mounted on the instrument panel, i.e. the dials and gauges as well as switches and illumination lamps and other items.

A vehicle sub-assembly (including an instrument panel) is known from EP—A2—0081656, which was published after the filing date of the present application. This specification describes a sub-assembly, including instruments and their wiring and heater unit which are all assembled together before being mounted in a vehicle.

A problem with this sub-assembly however is the manner of fitting the heater unit, connecting it to its various distribution ducts, as well as subsequent maintenance.

The present invention seeks to provide an instrument panel in which assembly and subsequent maintenance of the heater unit is simplified.

According to the present invention, there is provided an instrument panel for a motor car, the panel being separate from a car and comprising a panel section, instruments mounted on the panel section, a wiring harness connecting the instruments to electrical connectors mounted on the panel section, and a heater unit mounted on the back of the panel section with air ducts connected between the heater unit and air vents on the panel section, characterised in that the heater unit is divided into two parts containing all the mechanical components horizontal separation plane, the lower part containing all the mechanical components and the upper part containing air deflection surfaces.

By assembling the instrument panel in this way, quality testing of the sub-assembly is possible before final assembly into the vehicle and furthermore the final assembly is very much simplified.

The wiring harness preferably terminates in the vehicle fuse box which is also mounted on the instrument panel.

There may be a single, multi-pin connector unit through which the instrument panel wiring will be connected to the vehicle wiring.

A problem in the past which has made it necessary to fit the speedometer after the mounting of the instrument panel has been the necessity to connect up the speedometer cable. If an electrically driven speedometer is used, the necessary connections can be in the wiring harness already mentioned and thus the speedometer and associated instruments can be made part of the preassembled instrument panel.

The invention will now be further described, by way of example, with reference to the accompanying drawings, in which:

Figure 1 is a rear perspective view of a panel section for an instrument panel;

Figure 2 shows the panel section of Figure 1 with a wiring harness fitted;

Figure 3 is an exploded of a heater unit; and

Figure 4 is a rear perspective view of a completed instrument panel.

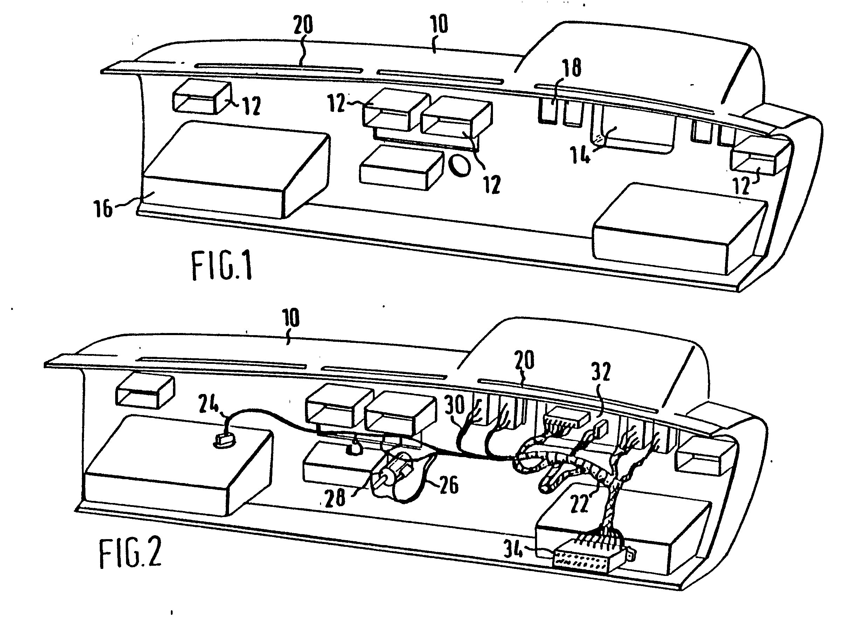

The panel section 10 shown in Figure 1 is moulded in a conventional manner from materials usually used for this purpose. Visible in this rear view are a number of air vents 12, an aperture 14 for a speedometer instrument, a glove box 16 and switch housings 18. On the top of the panel section can be seen demister slots 20.

Figure 2 shows a wiring harness 22 fitted to the panel section 10, together with the various instruments which are fed with current through the harness. For example, a lead 24 leads to a lamp in the glove box 16; a lead 26 leads to a cigarette lighter 28 and leads 30 lead to accessory switches mounted either side of the speedometer 32. The harness 22 ends in a connector unit 34 which may be combined with the vehicle fuse box.

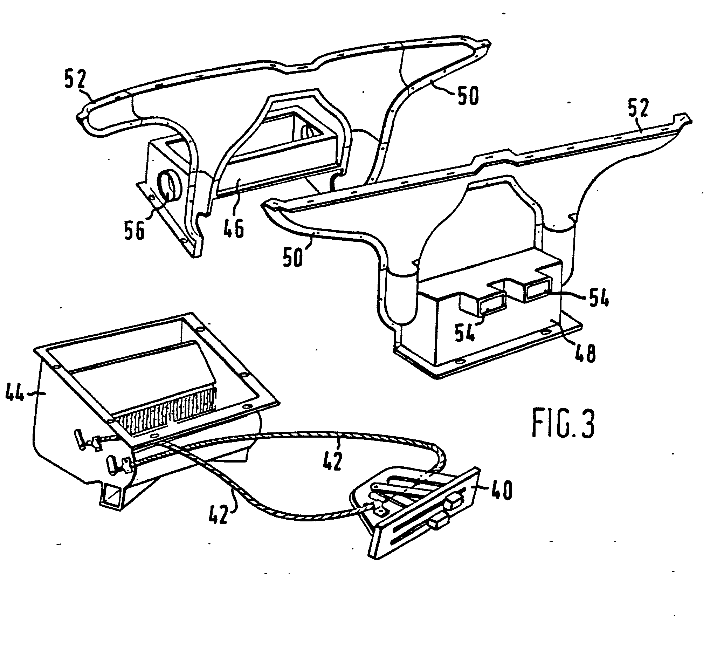

Figure 3 shows the components of the heater unit. These components are a control unit 40 connected by Bowden cables 42 to a control box 44. This control box contains the heat exchange matrix and the ventilator flaps which direct the heated air according to the position of the knobs on the control unit 40.

The upper part is divided into two sections 46 and 48. The upper part of each of these sections (known as the "fish-tails") are welded together in assembly along the edges 50, to provide an air channel to the demister slots 20. The upper edges 52 of these fish-tails are welded to the under side of the panel section 10. The section 48 has two exit ducts 54 which are to be connected to the central air ducts 12 on the panel section 10, to provide air for the face fins. The rear section 46 is open at the top for connection to an incoming airflow and has side outlets 56 which, in the completed instrument panel, are connected by ducts 58 to the outside vents 12 in the panel section 10.

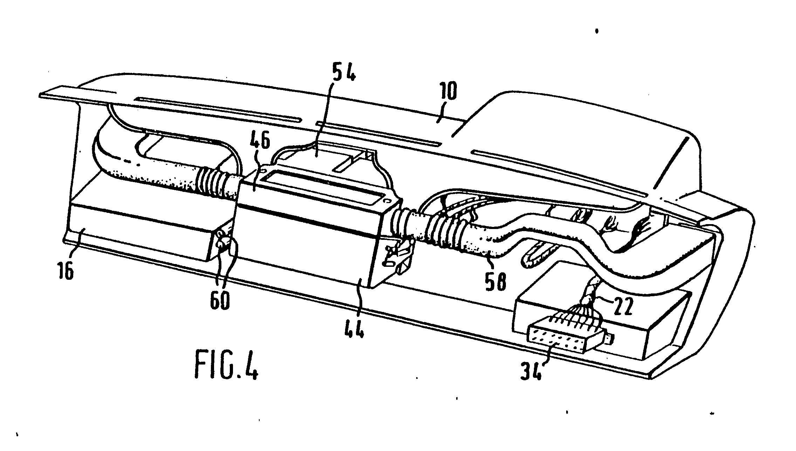

The completed instrument panel is shown in Figure 4. This sub-assembly can be produced off-line, and the necessary function testing can also be carried out off-line.

When these sub-assemblies are to be mounted in the vehicles, all that is required is a single air connection to the top of the heater unit 46, a single electrical connection to the plug 34 and the necessary mechanical connection of the panel 10 to the vehicle body.

The constructional details of the heater unit are of some importance. The idea of splitting the unit horizontally is thought to be new and to provide a considerable improvement over previous arrangements in that all the mechanical parts can be arranged in the lower part whilst the upper part directs the heated air as desired. Since the upper part is made in two halves, internal deflecting planes can easily be fitted between the two halves, and this also makes it possible to make the fish-tails integral with the rest of the unit.

Upon installation in the car, the heater box would be foam-sealed to the air intake aperture in the plenum, and the water connections would be made to the engine compartment as conventionally done, through the pipes 60.

It is the lower part of the heater unit which is most likely to require attention once the vehicle is in use, and to facilitate this it is possible to simply unbolt the lower part from the upper part to carry out any maintenance.

A further advantage of making the instrument panel as the pre-assembled sub-unit described is that the integration of the heater unit with the panel section 10 improves the rigidity of the whole unit which is of advantage in the assembly process.

## Claims

1. An instrument panel for a motor car, the panel being separate from a car and comprising a panel section (10), instruments mounted on the panel section, a wiring harness (22) connecting the instruments to electrical connectors mounted on the panel section, and a heater unit (46) mounted on the back of the panel section (10) with air ducts (54) connected between the heater unit and air vents (12) on the panel section (10), characterised in that the heater unit is divided into two parts (44, 46, 48) along a generally horizontal separating plane, the lower part (44) containing all the mechanical components and the upper part (46, 48) containing air deflection surfaces.

2. An instrument panel as claimed in Claim 4, wherein the upper part of the heater unit is divided along a generally vertical plane into two parts (46, 48).

3. An instrument panel as claimed in Claim 1, characterised in that the connectors for the wiring harness are combined in a single plug (34) or socket unit adapted to mate with a single socket or plug in the car.

4. An instrument panel as claimed in Claim 1 or Claim 2, including an electrically driven speedometer.

## Patentansprüche

1. Eine Instrumententafel für einen Kraftwagen, wobei die als separate Einheit ausgeführte Tafel einen Tafelformkörper (10), im Tafelformkörper montierte Instrumente, einen Kabelbaum (22) zur Verbindung der Instrumente mit im Tafelformkörper montierten elektrischen Anschlüssen sowie eine hinten am Tafelformkörper (10) montierte Heizungseinheit (46) mit Luftführungen (54) zur Verbindung der Heizungseinheit mit den im Tafelformkörper (10) vorhandenen Belüftungsöffnungen (12) umfaßt, dadurch gekennzeichnet, daß die Heizungseinheit entlang einer im allgemeinen horizontalen Trennebene in zwei Teile (44, 46, 48) unterteilt ist, wobei der untere Teil (44) alle mechanischen Bauteile und der obere Teil (46, 48) Luftleitflächen enthält.

2. Eine Instrumententafel gemäß Anspruch 4, wobei der obere Teil der Heizungseinheit entlang einer im allgemeinen vertikalen Ebene in zwei Teile (46, 48) unterteilt ist.

3. Eine Instrumententafel gemäß Anspruch 1, dadurch gekennzeichnet, daß die Anschlüsse für den Kabelbaum in einer einzelnen Steckkontakt- (34) oder Steckfassungseinheit zusammengefaßt sind, die so ausgeführt ist, daß ein Anschluß an eine einzelne Fassung oder einen einzelnen Stecker im Kraftwagen möglich ist.

4. Eine Instrumententafel gemäß Anspruch 1 oder Anspruch 2, einschließlich eines elektrisch betriebenen Geschwindigkeitsmessers.

## Revendications

1. Tableau de bord pour véhicule automobile indépendant de ce dernier et comprenant une partie servant de planche de bord (10), des instruments montés sur cette partie (10), un faisceau de câbles (22) reliant ces instruments à des connecteurs électriques montés sur cette partie, et un dispositif de chauffage (46) monté sur l'arrière de cette partie avec des conduits d'air (54) raccordés entre le dispositif de chauffage et des évents d'air (12) de cette partie (10), caractérisé en ce que le dispositif de chauffage est divisé en deux parties (44, 46, 48) de manière que suivant un plan de partage pratiquement horizontal, la partie inférieure (44) contienne tous les organes mécaniques et que la partie supérieure (46, 48) contienne les surfaces déflectrices d'air.

2. Tableau de bord suivant la revendication 1, caractérisé en ce que la partie supérieure du dispositif de chauffage est divisée par un plan à peu près vertical en deux groupements (46, 48).

3. Tableau de bord suivant la revendication 1, caractérisé en ce que les connecteurs pour le faisceau de câbles sont combinés en une seule prise (34) mâle ou femelle adaptée à s'accoupler avec une seule fiche ou prise complémentaire de la voiture.

4. Tableau de bord suivant la revendications 1 ou 2, caractérisé en ce qu'il comprend un compteur de vitesse électrique.

FIG.1

FIG.2

0 108 522

FIG.3

FIG.4